# EUROPEAN PATENT APPLICATION

(11) **EP 3 736 895 A1**
(43) Date of publication of application: **11.11.2020**
(21) Application number: 20169539.2
(22) Date of filing: 15.04.2020
(51) Int. Cl.: H01M 8/04119

(54) **HUMIDIFIER**

(30) Priority: 07.05.2019 JP 2019087737
(71) Applicant: TOYOTA BOSHOKU KABUSHIKI KAISHA, Kariya-shi, Aichi 448-8651 (JP)
(72) Inventor: SAZAWA, Makoto, Kariya-shi,, Aichi 448-8651 (JP); TANAHASHI, Toshihiko, Kariya-shi,, Aichi 448-8651 (JP)
(74) Representative: TBK

(57) **Abstract**

A humidifier includes a humidification part through which supply gas, supplied to a fuel cell, and discharge gas, discharged from the fuel cell, pass, and a water vapor permeable membrane arranged on the humidification part, and a separation part arranged on a part of a passage for the discharge gas upstream of the humidification part. The separation part is configured to separate a liquid from the discharge gas and is connected in series to the humidification part.

## Description

### BACKGROUND

### 1. Field

The following description relates to a humidifier.

### 2. Description of Related Art

Fuel cells mounted in automobiles or the like are supplied with fuel gas such as hydrogen and oxidizing gas such as the atmosphere to generate power on the basis of the reaction of the fuel gas and the oxidizing gas. This reaction generates water. The water generated in such a manner is contained in discharge gas flowing out of the fuel cells. Further, fuel cells have properties of increasing in the efficiency of generating power in a moist state. Thus, as described in Japanese Laid-Open Patent Publication No. 2012-134066, a humidifier may be used to set the inside of the fuel cells to the moist state. More specifically, the humidifier sets the inside of the fuel cells to the moist state by drawing moisture out of the discharge gas from the fuel cells and applying the moisture to supply gas, such as fuel gas and oxidizing gas supplied to the fuel cells.

The above-described humidifier includes a humidification part through which the supply gas, supplied to the fuel cells, and the discharge gas, discharged from the fuel cells, pass. The humidification part includes a water vapor permeable membrane. The humidifier is configured to draw water vapor, as moisture, out of the discharge gas passing through the humidification part, by exposing the discharge gas to the water vapor permeable membrane and to apply, to the supply gas passing through the humidification part, the moisture drawn into the water vapor permeable membrane by exposing the supply gas to the water vapor permeable membrane.

The discharge gas discharged from the fuel cells contains not only water vapor but also water of a liquid. Thus, the discharge gas and the water of the liquid flow into the humidification part of the humidifier to collect on the water vapor permeable membrane. When the water of the liquid collects on the water vapor permeable membrane in such a manner, the water of the liquid prevents the water vapor in the discharge gas from being drawn into the water vapor permeable membrane as moisture. This makes it difficult to effectively apply the moisture in the discharge gas to the supply gas through the water vapor permeable membrane.

### SUMMARY

It is an objective of the present disclosure to provide a humidifier capable of effectively applying the moisture in discharge gas to supply gas.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A humidifier that solves the above-described problem includes a humidification part through which supply gas, supplied to a fuel cell, and discharge gas, discharged from the fuel cell, pass. The humidifier also includes a water vapor permeable membrane arranged on the humidification part. The humidifier is configured to draw moisture out of the discharge gas passing through the humidification part, by exposing the discharge gas to the water vapor permeable membrane, and to apply, to the supply gas, the moisture drawn into the water vapor permeable membrane by exposing, to the water vapor permeable membrane, the supply gas passing through the humidification part. The humidifier further includes a separator arranged on a part of a passage for the discharge gas upstream of the humidification part. The separator is configured to separate a liquid from the discharge gas and is connected in series to the humidification part.

Other features and aspects will be apparent from the following detailed description, the drawings, and the claims.

### BRIEF DESCRIPTION OF THE DRAWINGS

Fig. 1 is a diagram showing the configuration of supplying and discharging gas to and from a fuel cell.
Fig. 2 is a schematic diagram showing the humidifier.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

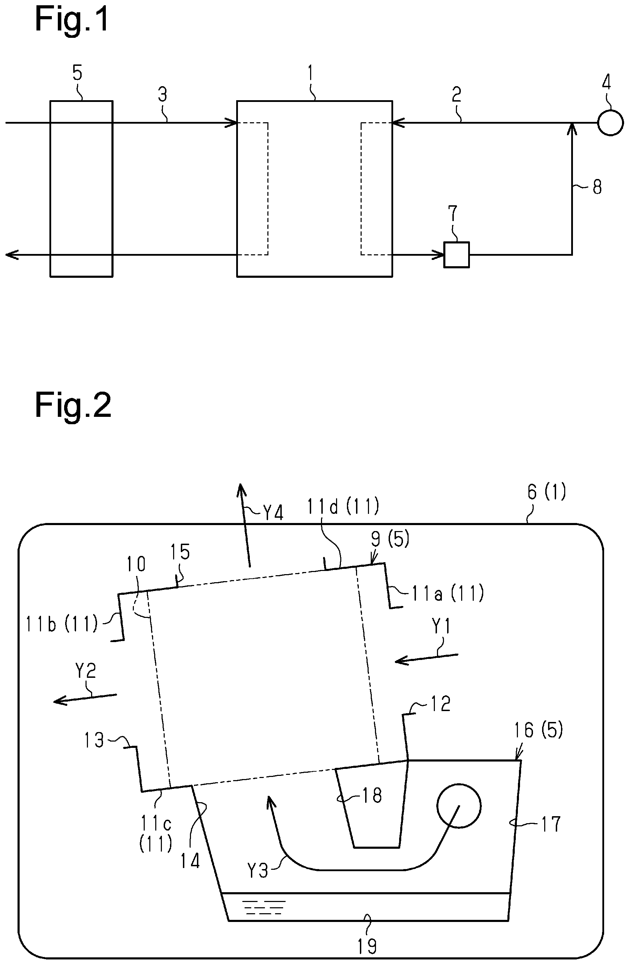

A humidifier 5 according to an embodiment will now be described with reference to Figs. 1 and 2.

As shown in Fig. 1, a fuel cell 1 includes membrane electrode assemblies that are separated by separators. The fuel cell 1 is supplied with fuel gas (hydrogen in the present embodiment) and oxidizing gas (atmosphere in the present embodiment) to generate power on the basis of the reaction of the hydrogen with the oxygen in the atmosphere.

A fuel passage 2 is connected to the anode side of the fuel cell 1. Hydrogen is supplied through the fuel passage 2, and discharge gas flows out of the fuel passage 2 from the anode side of the fuel cell 1. The upstream end of the fuel passage 2 is connected to a hydrogen tank 4 that stores hydrogen. The hydrogen from the hydrogen tank 4 is supplied to the anode side of the fuel cell 1, more specifically, to sections between the anode electrode layer of each membrane electrode assembly and the separator adjacent to the anode electrode layer through a part of the fuel passage 2 located upstream of the fuel cell 1.

An atmosphere passage 3 is connected to the cathode side of the fuel cell 1. The atmosphere is supplied through the atmosphere passage 3, and the discharge gas flows out of the cathode side of the fuel cell 1. The upstream end of the atmosphere passage 3 opens toward the atmosphere. The atmosphere is supplied to the cathode side of the fuel cell 1, more specifically, to sections between the cathode electrode layer of each membrane electrode assembly and the separator adjacent to the cathode electrode layer through a part of the atmosphere passage 3 located upstream of the fuel cell 1.

In the fuel cell 1, power is generated on the basis of the reaction of the hydrogen supplied to the anode side and the oxygen in the atmosphere supplied to the cathode side, and water is generated by that reaction. The water generated in this manner is contained in discharge gas flowing out from the anode side of the fuel cell 1 to a part of the fuel passage 2 downstream of the fuel cell 1 and is contained in discharge gas flowing out from the cathode side of the fuel cell 1 to a part of the atmosphere passage 3 downstream of the fuel cell 1.

The fuel cell 1 has properties of increasing in the efficiency of generating power. This is caused by setting the membrane electrode assemblies of the fuel cell 1 to a moist state. Thus, at least one of the fuel passage 2 and the atmosphere passage 3 may include a humidifier that draws moisture out of the discharge gas that has flowed out of the fuel cell 1 to apply the moisture to supply gas, such as the fuel gas and oxidizing gas flowing into the fuel cell 1. In this embodiment, the humidifier 5 is arranged on the atmosphere passage 3 such that the humidifier 5 extends over the part of the atmosphere passage 3 upstream and downstream of the fuel cell 1.

The discharge gas (atmosphere) that has flowed out from the fuel cell 1 to the part of the atmosphere passage 3 downstream of the fuel cell 1 is wet gas. The wet gas contains, in the state of water vapor, the water generated in the fuel cell 1. The humidifier 5 draws moisture (water vapor) out of the discharge gas and applies the drawn moisture to dried supply gas (atmosphere) flowing upstream of the fuel cell 1 in the atmosphere passage 3, so that the dried atmosphere becomes wet gas. Supplying the atmosphere, which has become the wet gas, to the cathode side of the fuel cell 1 sets the inside of the fuel cell 1 to the wet state.

The part of the fuel passage 2 located downstream of the fuel cell 1 (discharge side) is connected to a gas-liquid separator 7. The water in the discharge gas that has flowed from the fuel cell 1 (hydrogen that has not been used in the fuel cell 1) is separated from the discharge gas by the gas-liquid separator 7. The discharge gas (hydrogen) that has been separated from the water by the gas-liquid separator 7 recirculates through a hydrogen passage 8 to the part of the fuel passage 2 upstream of the fuel cell 1.

The humidifier 5 will now be described in detail.

Fig. 2 schematically shows the humidifier 5. The humidifier 5 is arranged on an end plate 6 of the fuel cell 1. The humidifier 5 includes a humidification part 9 through which the supply gas, supplied to the fuel cell 1, and the discharge gas, discharged from the fuel cell 1, pass. The humidification part 9 includes a housing 11, which has the form of a rectangular box, and a water vapor permeable membrane 10 accommodated in the housing 11. The water vapor permeable membrane 10 is exposed to the supply gas and the discharge gas passing through the humidification part 9 (inside of housing 11). The water vapor permeable membrane 10 draws water vapor out of the supply gas to apply the drawn moisture to the supply gas.

The housing 11 includes first and second walls 11a and 11b opposed to each other in the substantially horizontal direction (left-right direction in Fig. 2) and third and fourth walls 11c and 11d opposed to each other in the up-down direction. The first wall 11a includes a dry gas inflow port 12, and the second wall 11b includes a dry gas outflow port 13. The dry gas inflow port 12 causes supply gas to flow into the housing 11 as shown by arrow Y1 in Fig. 2. The dry gas inflow port 12 is connected to the part of the atmosphere passage 3 (Fig. 1) upstream of the fuel cell 1 and upstream of the humidifier 5. The dry gas outflow port 13 causes the supply gas to flow out of the housing 11 as shown by arrow Y2 in Fig. 2. The dry gas outflow port 13 is connected to the part of the atmosphere passage 3 (Fig. 1) upstream of the fuel cell 1 and downstream of the humidifier 5.

In the third and fourth walls 11c and 11d opposed to each other in the up-down direction, the lower one (i.e., third wall 11c) includes a wet gas inflow port 14, and the upper one (i.e., fourth wall 11d) includes a wet gas outflow port 15. The wet gas inflow port 14 causes discharge gas to flow into the housing 11 as shown by arrow Y3 in Fig. 2. The wet gas inflow port 14 is connected to the part of the atmosphere passage 3 (Fig. 1) downstream of the fuel cell 1 and upstream of the humidifier 5. The wet gas outflow port 15 causes the discharge gas to flow out of the housing 11 as shown by arrow Y4 in Fig. 2. The wet gas outflow port 15 is connected to the part of the atmosphere passage 3 (Fig. 1) downstream of the fuel cell 1 and downstream of the humidifier 5.

The housing 11 internally includes a dry gas passage (not shown) connecting the dry gas inflow port 12 to the dry gas outflow port 13 and extending in the substantially horizontal direction (left-right direction in Fig. 2). Further, the housing 11 internally includes a wet gas passage (not shown) connecting the wet gas inflow port 14 to the wet gas outflow port 15 and extending in the up-down direction. Whereas the supply gas passes through the dry gas passage from right to left in Fig, 2, the discharge gas passes through the wet gas passage from bottom to top. The dry gas passage and the wet gas passage respectively allow the supply gas and the discharge gas, which flow internally, to be independently exposed to the water vapor permeable membrane 10.

As shown in Fig. 2, a separation part 16 is arranged in the vicinity of the humidification part 9 of the humidifier 5. The separation part 16 separates a liquid from discharge gas. The separation part 16 is located at the part of the atmosphere passage 3 downstream of the fuel cell 1 (Fig. 1) and upstream of the humidification part 9. In other words, the separation part 16 is located at the part of the humidifier 5 upstream of the humidification part 9 in the passage for discharge gas. Thus, the separation part 16 is arranged in the atmosphere passage 3 such that the separation part 16 is connected in series to the humidification part 9. The separation part 16 includes an inlet passage 17, an outlet passage 18, and a reservoir 19. The inlet passage 17 is connected to the fuel cell 1 (Fig. 1) for the discharge gas to flow from top to bottom. The outlet passage 18 is connected to the humidification part 9 for the discharge gas to flow from bottom to top. The reservoir 19 connects the lower end of the inlet passage 17 and the lower end of the outlet passage 18 to each other, and stores water of the liquid that has been separated from the discharge gas. The upper end of the outlet passage 18 in the separation part 16 is directly connected to the wet gas inflow port 14 in the humidification part 9.

The operation of the humidifier 5 in the present embodiment will now be described.

Discharge gas (atmosphere) discharged from the fuel cell 1 to the part of the atmosphere passage 3 downstream of the fuel cell 1 passes through the inlet passage 17, the reservoir 19, and the outlet passage 18 of the separation part 16 in this order as shown by arrow Y3 in Fig. 2. Then, the discharge gas flows through the wet gas inflow port 14 into the wet gas passage in the housing 11 of the humidification part 9. When the discharge gas passes through the outlet passage 18 from bottom to top, the weight of the water of the liquid in the discharge gas causes the water to be separated from the discharge gas and stored in the reservoir 19. Then, the discharge gas that has been separated from the water of the liquid flows into the wet gas passage in the housing 11 of the humidification part 9.

Further, the discharge gas from which the water of the liquid has been separated by the separation part 16 passes through the wet gas passage in the housing 11 from bottom to top. This prevents the water of the liquid in the discharge gas from flowing into the wet gas passage in the housing 11 and collecting on the water vapor permeable membrane 10. If the water of the liquid collects on the water vapor permeable membrane 10 as described above, the water of the liquid may hinder the water vapor in discharge gas from being drawn into the water vapor permeable membrane 10 when the discharge gas passes through the wet gas passage in the housing 11. However, the occurrence of such a problem is prevented.

The present embodiment described above in detail has the following advantages.
(1) The water of a liquid is separated from discharge gas discharged from the fuel cell 1 by the separation part 16 in the humidifier 5. Then, the discharge gas flows into the housing 11 of the humidification part 9 in the humidifier 5 and passes through the wet gas passage in the housing 11. This prevents the water of the liquid in the discharge gas from flowing into the wet gas passage in the housing 11 and collecting on the water vapor permeable membrane 10. This also limits situations in which the collected water prevents the water vapor from being drawn from the discharge gas into the water vapor permeable membrane 10. Thus, the moisture (water vapor) in the discharge gas is effectively drawn into the water vapor permeable membrane 10, and the drawn moisture is efficiently applied to the supply gas passing through the dry gas passage in the housing 11.
(2) The humidification part 9 is configured such that discharge gas passes through the wet gas passage in the housing 11 from bottom to top. Thus, even if the water of the liquid is contained in the discharge gas passing through the wet gas passage in the housing 11 from bottom to top, the water is pulled downward by gravity. This limits situations in which the water reaches the water vapor permeable membrane 10 in the housing 11.
(3) The separation part 16 is configured such that when the discharge gas discharged from the fuel cell 1 passes through the outlet passage 18 of the separation part 16 from bottom to top, the separation part 16 separates the water of the liquid in the discharge gas from the discharge gas using the weight of the water and stores the water in the reservoir 19. The separation part 16, which has such a simple configuration, separates the liquid from the discharge gas to allow the discharge gas that has been separated from the water of the liquid to flow into the wet gas passage in the housing 11 of the humidification part 9.
(4) The upper end of the outlet passage 18 in the separation part 16 is directly connected to the wet gas inflow port 14 in the humidification part 9. This allows the discharge gas from which the liquid has been separated by separation part 16 to directly flow into the housing 11 of the humidification part 9. As a result, the discharge gas from which the liquid has been separated by the separation part 16 is prevented from decreasing in temperature before flowing into the housing 11. This prevents situations in which the temperature decrease condenses the water vapor in the discharge gas to change to the water of the liquid and the discharge gas and the water of the liquid flow into the wet gas passage in the housing 11.

The above-described embodiment may be modified as follows. The above-described embodiments and the following modifications can be combined as long as the combined modifications remain technically consistent with each other.

The upper end of the outlet passage 18 in the separation part 16 does not necessarily have to be directly connected to the wet gas inflow port 14 in the housing 11 of the humidification part 9. Instead, for example, the upper end of the outlet passage 18 in the separation part 16 may be connected in series to the wet gas inflow port 14 by, for example, a pipe.

A liquid does not have to be separated from discharge gas by the separation part 16 in the above-described manner. Instead, surface tension or centrifugation may be employed.

The humidification part 9 does not necessarily have to be configured such that discharge gas passes through the wet gas passage in the housing 11 from bottom to top.

The fuel passage 2 may include a humidifier. In this case, supply gas (hydrogen) flowing in the part of the fuel passage 2 upstream of the fuel cell 1 and discharge gas flowing out from the fuel cell 1 to the part of the fuel passage 2 downstream of the fuel cell 1 pass through the humidifier. This humidifier draws moisture (water vapor) out of the discharge gas to apply the moisture to the supply gas.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

A humidifier includes a humidification part through which supply gas, supplied to a fuel cell, and discharge gas, discharged from the fuel cell, pass, and a water vapor permeable membrane arranged on the humidification part, and a separation part arranged on a part of a passage for the discharge gas upstream of the humidification part. The separation part is configured to separate a liquid from the discharge gas and is connected in series to the humidification part.

## Claims

1. A humidifier comprising:
a humidification part (9) through which supply gas, supplied to a fuel cell (1), and discharge gas, discharged from the fuel cell (1), pass; and
a water vapor permeable membrane (10) arranged on the humidification part (9), wherein
the humidifier is configured to draw moisture out of the discharge gas passing through the humidification part (9), by exposing the discharge gas to the water vapor permeable membrane (10), and to apply, to the supply gas, the moisture drawn into the water vapor permeable membrane (10) by exposing, to the water vapor permeable membrane (10), the supply gas passing through the humidification part (9), **characterized in that**
a separation part (16) is arranged on a part of a passage for the discharge gas upstream of the humidification part (9), and
the separation part (16) is configured to separate a liquid from the discharge gas and is connected in series to the humidification part (9).

2. The humidifier according to claim 1, **characterized in that** the humidification part (9) is configured such that the discharge gas passes through the humidification part (9) from bottom to top.

3. The humidifier according to claim 1 or 2, **characterized in that** the separation part (16) includes
an inlet passage (17) connected to the fuel cell (1) for the discharge gas to flow from top to bottom,
an outlet passage (18) connected to the humidification part (9) for the discharge gas to flow from bottom to top, and
a reservoir (19) that connects a lower end of the inlet passage (17) and a lower end of the outlet passage (18) to each other and stores water of the liquid that has been separated from the discharge gas.

4. The humidifier according to claim 3, **characterized in that**
the humidification part (9) is configured such that the discharge gas passes through the humidification part (9) from bottom to top, and
an upper end of the outlet passage (18) in the separation part (16) is directly connected to an inflow port (14) for the discharge gas in the humidification part (9).
